# EUROPÄISCHE PATENTSCHRIFT

(11) **EP 2 042 858 B1**
(45) Veröffentlichungstag und Bekanntmachung des Hinweises auf die Patenterteilung: **22.09.2010**
(21) Anmeldenummer: 09000639.6
(22) Anmeldetag: 23.02.2002
(51) Int. Cl.: G01N 22/04

(54) **Mikrowellenresonatormesseinrichtung**
Microwave resonator measuring device
Dispositif résonateur à microondes de mesure

(30) Priorität: 15.03.2001 DE 10112499; 22.11.2001 DE 10157266
(43) Veröffentlichungstag der Anmeldung: 01.04.2009
(62) Teilanmeldung aus: 02004050.7
(73) Patentinhaber: Hauni Maschinenbau AG, 21033 Hamburg (DE)
(72) Erfinder: Möller, Henning, 22605 Hamburg (DE); Tobias, Jörg, 21423 Drage (DE); Taute, Wolfgang, 24235 Laboe (DE); Knöchel, Reinhard, 25336 Elmshorn (DE)
(74) Vertreter: Seemann, Ralph

(56) Entgegenhaltungen:
- DE-A1- 19 625 944
- FR-A- 2 174 318
- GB-A- 2 230 099
- US-A- 4 042 879

## Beschreibung

Die Erfindung betrifft eine Mikrowellenmesseinrichtung für die Prüfung einer Materialmenge, insbesondere eines Materialstromes der Tabak verarbeitenden Industrie, auf Vorhandensein wenigstens eines Fremdmaterials und/oder für die Erfassung der Masse, Dichte und/oder der Feuchte der Materialmenge, wobei die gattungsgemäße Messeinrichtung wenigstens ein Resonatorgehäuse umfasst, das wenigstens eine Durchtrittsöffnung für die Materialmenge aufweist und in dem ein elektromagnetisches Feld erzeugbar ist. Schließlich betrifft die Erfindung ein Verfahren zur Prüfung einer Materialmenge auf Vorhandensein wenigstens eines Fremdmaterials und/oder zur Erfassung der Masse, Dichte und/oder der Feuchte der Materialmenge mittels einer Mikrowellenmesseinrichtung.

Eine entsprechende Resonatoreinrichtung bzw. ein Resonatorgehäuse für Mikrowellen ist aus der DE 198 54 550 A1 der Anmelderin bekannt. In diesem Dokument wird ein von einem Strang der Tabak verarbeitenden Industrie durchsetztes Resonatorgehäuse beschrieben, dem Mikrowellen zwecks Erfassung der Masse und/oder Feuchte des Strangmaterials zugeführt sind. Der mit diesem Resonatorgehäuse verfolgte Zweck besteht darin, die Messgenauigkeit und ggf. Messempfindlichkeit bei der Erfassung der Masse und/oder Feuchte von Füllermaterialien von Strängen der Tabak verarbeitenden Industrie zu verbessern. Dieses wird gem. der DE 198 54 550 A1 dadurch erreicht, dass das Gehäuse zumindest teilweise aus einem Material mit einem niedrigen Ausdehnungskoeffizienten besteht, so dass bei entsprechender Temperaturschwankung das Gehäuse eine im Wesentlichen gleiche Größe behält. Der Verbesserung der Messgenauigkeit dient es auch, wenn die Temperatur des Resonatorgehäuses auf einen konstanten Wert geregelt wird. Schließlich ist es gem. diesem Dokument vorteilhaft, wenn die Wände des Innenraumes des Gehäuses zumindest teilweise mit einem korrosionsbeständigen Metall beschichtet sind oder aus einem derartigen Metall bestehen. Hierdurch lassen sich die Messgenauigkeiten bei der Masse und/oder Feuchteerfassung der o.g. Materialien erheblich verbessern.

Aus der DE 101 00 664.0 der Anmelderin ist ferner ein Verfahren zum Prüfen eines Produktionsmaterials bzw. einer Materialmenge bekannt, die hauptsächlich ein Produktionsmaterial enthält, wobei das Vorhandensein eines Fremdmaterials in dieser Menge geprüft wird, und wobei ein Mikrowellenfeld erzeugt wird, die Materialmenge in den Wirkbereich des Mikrowellenfeldes eingebracht und die Beeinflussung des Mikrowellenfeldes analysiert wird, wobei die Ist-Werte einer ersten und einer zweiten charakteristischen Größe des Mikrowellenfeldes gleichzeitig gemessen werden, wobei ein zulässiger Wertebereich für diese Ist-Werte vorgegeben wird, und wobei geprüft wird, ob die Ist-Werte in dem zulässigen Wertebereich liegen und wobei ein Signal erzeugt wird, wenn die Ist-Werte nicht in dem zulässigen Wertebereich liegen. Als Größe des Mikrowellenfeldes werden im Rahmen der Anmeldung sowohl reale Größen des erzeugten Mikrowellenfeldes wie Amplitude und Phase bezeichnet als auch Größen eines das Mikrowellenfeld führenden Bauteiles, wie z.B. die Resonanzfrequenz und die Bandbreite eines Resonators, in dem sich das Mikrowellenfeld ausbreitet.

Bei dem bekannten Messverfahren wird das Messgut durch das Feld eines Resonators bewegt. Die dielektrischen Eigenschaften des Messgutes verändern das Feld. Durch Messung der Änderung der Resonanzeigenschaften bzw. des Feldes kann eine Bestimmung von z.B. Masse, Dichte und Feuchte sowie die Erkennung von Fremdkörpern erfolgen. Es ist hierbei schwierig, sehr kleine Fremdkörper zu erkennen bzw. eine relativ genaue Ortsauflösung zu erzielen. Insbesondere die Lage des Fremdkörpers im Verhältnis zum Feldverlauf bestimmt die Nachweisgenauigkeit.

Aus DE 196 25 944 A1 ist ferner eine Vorrichtung bekannt, in der die komplexen Dielektrizitätskonstanten von Tabak durch Auswertung der von der Anwesenheit des Tabaks verursachten Verstimmung einer HF-Resonatoranordnung mit zwei jeweils ein Gehäuse aufweisenden HF-Resonatoren gemessen wird, von denen mindestens einer eine Verstelleinrichtung für die Resonanzfrequenz aufweist. Hierzu wird ein Tabakstrang durch eine Einlass- und eine Auslassöffnung durch Gehäuse der Resonatoren durchgeführt.

Aufgabe der vorliegenden Erfindung ist es, eine Mikrowellenmesseinrichtung anzugeben, mittels der die Empfindlichkeit eines Verfahrens zur Bestimmung, ob ein Fremdmaterial in einem Materialstrom enthalten ist und/oder für die Erfassung der Masse, Dichte und/oder der Feuchte des Materialstromes oder der Materialmenge erhöht wird. Es ist ferner Aufgabe der vorliegenden Erfindung, die Empfindlichkeit eines entsprechenden Verfahrens zu erhöhen. Ferner ist es Aufgabe der vorliegenden Erfindung, Mittel vorzusehen und ein Verfahren anzugeben, mit der die Genauigkeit und die Ortsauflösung entsprechender Messungen verbessert wird.

Diese der Erfindung zugrunde liegende Aufgabe wird gelöst durch eine Mikrowellenmesseinrichtung für die Prüfung einer Materialmenge, insbesondere eines Materialstroms der Tabak verarbeitenden Industrie, auf Vorhandensein wenigstens eines Fremdmaterials und/oder für die Erfassung der Masse, Dichte und/oder der Feuchte der Materialmenge, mit wenigstens einem Resonatorgehäuse, das wenigstens eine Durchtrittsöffnung für die Materialmenge aufweist und in dem ein elektromagnetisches Feld erzeugbar ist, dadurch weitergebildet, dass die Messeinrichtung wenigstens zwei Resonatorgehäuse umfasst, die jeweils einen Messbereich definieren, wobei die elektromagnetischen Felder jeweils ein elektrisches Feld umfassen, die in den jeweiligen Messbereichen in zueinander verschiedenen Richtungen im Raum orientiert sind. Hierbei ist vorzugsweise das elektromagnetische Feld ein Mikrowellenfeld, das in dem Resonatorgehäuse ein stehendes Mikrowellenfeld umfasst. Die zueinander verschiedenen Richtungen der elektrischen Felder ermöglichen erfindungsgemäß die genauere Bestimmung von Fremdkörpern, da Fremdkörper, die mittels des einen Resonatorgehäuses nicht erfasst werden, dann mit großer Wahrscheinlichkeit mittels des anderen Resonatorgehäuses erfasst werden können. Hierbei ist insbesondere an Fremdkörper zu denken, die eine geometrische Form aufweisen, die in eine Richtung größer ist als in eine andere Richtung. Die zueinander verschiedenen Richtungen im Raum der Felder bedeuten insbesondere, dass diese Felder in unterschiedlichen Winkeln zur Förderrichtung ausgeprägt sind.

Vorzugsweise liegen die Messbereiche in Förderrichtung des Materialstromes hintereinander, so dass eine getrennte Auswertung der entsprechenden Messungen der Materialmenge in den Messbereichen erfolgen kann und so dass eine Beeinflussung der jeweiligen Messbereiche durch den benachbarten Messbereich nicht stattfindet.

Eine besonders bevorzugte Ausführungsform der vorliegenden Erfindung liegt dann vor, wenn die elektrischen Felder im Wesentlichen orthogonal zueinander orientiert sind. Im Rahmen dieser Erfindung bedeutet orthogonal insbesondere senkrecht zueinander.

Wenn ein elektrisches Feld im Wesentlichen in Förderrichtung des Materialstroms orientiert ist und ein elektrisches Feld quer dazu, kann zum einen auf herkömmliche Art und Weise wie bspw. in der DE 198 54 550 A1 beschrieben ist, entsprechend eine Messung erfolgen und zum anderen eine zusätzliche und ergänzende Messung quer zu dieser Richtung.

Im Rahmen dieser Erfindung bedeutet Feld insbesondere elektrisches Feld. Eine Richtung bzw. Orientierung eines Feldes ist im Falle eines dynamischen Feldes, wie bei einer stehenden elektromagnetischen Welle, die Richtung des Feldstärkevektors.

Wenn drei Resonatorgehäuse vorgesehen sind, kann die Genauigkeit der Messung weiter erhöht werden. Hierzu ist das dritte Resonatorgehäuse vorzugsweise derart ausgestaltet, dass das elektrische Feld im Wesentlichen orthogonal zu denjenigen der anderen beiden Resonatorgehäuse ist.

Vorzugsweise umfasst die erfindungsgemäße Messeinrichtung wenigstens ein die Energiedichte von elektromagnetischen Wellen erhöhendes Element, wodurch die Energiedichte in wenigstens einem Teil des Prüfbereichs erhöhbar ist.

Durch diese Maßnahme ist es möglich, eine Art Bündelung der elektromagnetischen Wellen in dem Prüfbereich zu erzielen, wodurch ein erhöhter Fluss der entsprechenden Wellen wie insbesondere Mikrowellen durch das zu untersuchende Material bzw. den Bereich des zu untersuchenden Materialstromes fließt. Damit ist eine erhöhte Empfindlichkeit bei der Messung der Masse, Dichte und/oder der Feuchte des Materialstroms und/oder der Prüfung, ob ein Fremdmaterial vorhanden ist, gegeben, ohne dass mehr Energie in die Resonatoreinrichtung eingekoppelt werden müsste. Im Rahmen dieser Erfindung bedeutet, die Energiedichte von elektromagnetischen Wellen zu vergrößern bzw. zu erhöhen, auch insbesondere, dass diese Wellen gebündelt, fokussiert, verengt bzw. verdichtet werden. Bei den elektromagnetischen Wellen handelt es sich um Mikrowellen. Die Materialmenge ist insbesondere ein Materialstrom. Im Rahmen dieser Erfindung umfasst der Begriff Prüfbereich insbesondere auch den Begriff Messbereich.

Insbesondere umfasst das Element einen Leitungsresonator mit wenigstens einer als Elektrode fungierenden Endfläche. Durch Verwendung eines Leitungsresonators, ist es möglich, auf einfache Art und effektive Weise die in den Resonator eingekoppelten Wellen zu bündeln, wobei insbesondere die Wellen bzw. das entsprechende Feld aus der Endfläche gebündelt austritt.

Ferner ist eine Einkoppelantenne und eine Auskoppelantenne vorgesehen, die insbesondere symmetrisch in der Resonatoreinrichtung angeordnet sind. Ferner sind die Antennen vorzugsweise in der Nähe einer Stelle des Leitungsresonators angeordnet, an der die Kopplung vermittelnde Feldkomponente eine hohe Amplitude, vorzugsweise ein Maximum, aufweist.

Eine besonders gute Kopplung der auf das Element eingekoppelten Wellen und von dem Element ausgekoppelten Wellen ist dann gegeben, wenn das Element in einem Hohlraum der Resonatoreinrichtung beabstandet zu den den Hohlraum begrenzenden Wänden angeordnet ist.

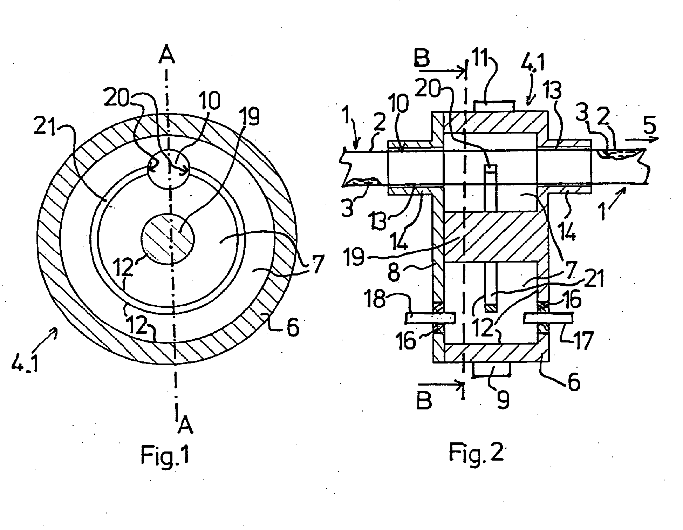

Ein besonders effektives Verfahren zum Prüfen des Materialstromes ist dann möglich, wenn die wenigstens eine Endfläche in der Nähe des Materialstroms oder der Materialmenge bzw. des Prüfbereichs angeordnet ist. In einer Ausführungsform ist die Größe der Endfläche kleiner als der Bereich des Materialstroms, der sich in der Resonatoreinrichtung in einem Prüfbereich befindet, wobei eine Querschnittsfläche, die im Wesentlichen parallel zur Endfläche ist, Berücksichtigung findet. Hierbei ist der Materialstrom bspw. im Falle eines Materialstroms der Tabak verarbeitenden Industrie ein Tabakstrom, der mit einem Umhüllungsmaterial wie Papier umhüllt ist, also ein Zigarettenstrang, dessen Durchmesser i.d.R. im Bereich von etwa 6 bis ca. 10 mm liegt. Die Größe der Endfläche, die bspw. im Wesentlichen rechteckig sein kann, ist vorzugsweise kleiner als 1/10 der auf eine Wand der Resonatoreinrichtung zu projizierenden Fläche des Materialstroms. Hierunter ist bspw. ein Flächenverhältnis gemeint, wie in Fig. 2 dargestellt ist, wobei die in Fig. 2 dargestellte Querschnittsfläche des Zigarettenstrangs im Hohlraum 7 als maßgebliche Fläche gemeint ist.

Der Leitungsresonator kann ein Metallstreifen oder ein dünner Quader aus Metall sein, der in Richtung des Prüfbereichs eine Endfläche aufweist. Wenn vorzugsweise wenigstens eine Innenwand des Resonatorgehäuses als Elektrode, insbesondere als Gegenelektrode zur Endfläche, dient, kann das elektromagnetische Wellenfeld zwischen der Endfläche des Metallstreifens und dieser Innenwand aufgebaut werden, so dass ein definierter eng begrenzter Messbereich gegeben ist.

Wenn zwei Endflächen vorgesehen sind, die auf den Prüfbereich ausgerichtet sind, wobei diese insbesondere gegenüberliegend angeordnet sind, so dass der Materialstrom durch den Raum zwischen den Endflächen bewegbar ist, ist eine besonders gleichmäßige Bündelung der Wellen gegeben, wobei insbesondere eine sehr hohe Energiedichte möglich ist. Der Leitungsresonator kann ein offener Ring sein. Wenn die beiden Endflächen im Wesentlichen parallel zueinander sind, wird die Homogenität des Wellenfeldes weiter erhöht.

Wenn das eine Element wenigstens teilweise aus einem Material mit einem niedrigen Ausdehnungskoeffizienten, insbesondere bezüglich der Temperatur, besteht, sind sehr verlässliche und genaue Messungen möglich. Wenn ferner das wenigstens eine Element mit einem korrosionsbeständigen Material, insbesondere einem Metall, beschichtet ist und/oder wenigstens teilweise aus einem solchen besteht, ist eine entsprechende Langlebigkeit der Resonatoreinrichtung gegeben.

Eine kompaktbauende Messeinrichtung ist dann gegeben, wenn ein einziges Gehäuse wenigstens zwei Resonatorgehäuse umfasst.

Die Aufgabe wird ferner durch ein Verfahren zur Prüfung einer Materialmenge, insbesondere eines Materialstromes der Tabak verarbeitenden Industrie, auf Vorhandensein wenigstens eines Fremdmaterials und/oder zur Erfassung der Masse, Dichte und/oder Feuchte der Materialmenge mittels einer Mikrowellenmesseinrichtung gelöst, wobei ein erstes elektromagnetisches Feld in einem ersten Resonator der Mikrowellenmesseinrichtung erzeugt wird und wobei ein zweites elektromagnetisches Feld in einem zweiten Resonator der Mikrowellenmesseinrichtung erzeugt wird, wobei die Materialmenge durch das erste und das zweite Feld hindurchbewegt wird und wobei eine Änderung wenigstens einer Eigenschaft der elektromagnetischen Felder gemessen wird, wobei die elektromagnetischen Felder elektrische Felder umfassen, die in zueinander verschiedenen Richtungen orientiert sind.

Eine Eigenschaft der elektromagnetischen Felder kann bspw. die Feldstärke, die Frequenz oder die Phase sein. Ferner kann eine Eigenschaft eines elektromagnetischen Feldes im Falle eines stehenden Wellenfeldes bspw. bei einem Resonator die Lage der Bäuche bzw. Knoten sein oder die Resonanzfrequenz sowie auch die Amplitude.

Erfindungsgemäß sind die elektrischen Felder in zueinander verschiedenen Richtungen orientiert. Hierbei ist davon auszugehen, dass sowohl das E-Feld als auch das H-Feld in jeweils zueinander verschiedenen Richtungen orientiert sind. Wenn ein dritter Resonator vorgesehen ist, der ein drittes elektromagnetisches Feld erzeugt, wobei die Materialmenge durch das dritte Feld hindurchbewegt wird, wobei das dritte Feld in zu dem ersten Feld und dem zweiten Feld unterschiedliche Richtung orientiert ist und die Änderung wenigstens einer Eigenschaft des dritten Feldes gemessen wird, kann eine noch genauere Analyse des Materialstroms aus Fremdkörper bzw. eine noch genauere Erfassung der Dichte, Feuchte und Masse des Materialstroms ermöglicht sein.

Vorzugsweise sind die elektrischen Felder in den jeweiligen Resonatoren im Wesentlichen orthogonal zueinander.

Wenn die gemessenen Werte ausgewertet werden, um ein Auswurfsignal zu generieren, ist es möglich, bspw. Abschnitte des Materialstroms von der weiteren Verarbeitung auszusondern. Hierdurch wird vermieden, dass bspw. bei der Zigarettenherstellung schlecht gefüllte Zigaretten oder zu trockene Zigaretten oder Zigaretten mit einem Fremdmaterial hergestellt werden. Vorzugsweise werden die gemessenen Werte der Resonatoren miteinander in Beziehung gesetzt, so dass eine sehr genaue Ortsauflösung möglich ist. Mittels einer derartig genauen Ortsauflösung ist der Ausschuss an gefördertem Material möglichst gering zu halten. Die Kopplung der Messergebnisse der unterschiedlichen Resonatoren erhöht also die Genauigkeit bzw. die Ortsauflösung der Messungen.

Im Folgenden wird anhand von Ausführungsbeispielen unter Bezugnahme auf die Zeichnungen die Erfindung näher erläutert, wobei zur Offenbarung aller nicht näher erläuterten erfindungsgemäßen Einzelheiten auf die Zeichnungen verwiesen wird. Es zeigen:
- Fig. 1: einen Querschnitt durch ein Resonatorgehäuse in einer Aufsicht,
- Fig. 2: einen Querschnitt durch das Resonatorgehäuse aus Fig. 1 entlang der Schnittlinie A-A,
- Fig. 3: einen Querschnitt eines Resonatorgehäuses gem ei- nem weiteren Ausführungsbeispiel der Erfindung,
- Fig. 4: einen Querschnitt des Resonatorgehäuses der Fig. 3 entlang der Schnittlinie C-C in Seitenansicht und
- Fig. 5: eine schematische Anordnung einer erfindungsgemä- ßen Messeinrichtung.

In den folgenden Figuren sind jeweils dieselben Bezugsziffern für gleiche Elemente verwendet worden, so dass von einer erneuten Vorstellung dieser Elemente abgesehen wird.

Fig. 1 zeigt einen Querschnitt durch ein Resonatorgehäuse 4.1 in einer Aufsicht, wobei diese entlang der Pfeile B am Schnitt B-B der Fig. 2 zu betrachten ist. Es sind nur einige Merkmale in Fig. 1 dargestellt. Einige Merkmale, die in Fig. 2 dargestellt sind, wurden der Übersichtlichkeit halber in Fig. 1 nicht eingezeichnet. Ein Hohlzylinder 6 aus Metall, der vorzugsweise zumindest von innen mit einer Goldschicht 12 versehen ist, grenzt das Resonatorgehäuse 4.1 ein. In der Mitte des Hohlzylinders 6 ist ein Pfosten 19 dargestellt, der auch mit einer Goldschicht 12 belegt ist. Sowohl der Hohlzylinder 6 als auch der Pfosten 19 sind im Querschnitt dargestellt. In einer Ansicht ist in dem Innenraum 7 bzw. Hohlraum 7 ein Leitungsresonator 21 dargestellt, der ein offener Ring ist und zwei Endflächen 20 aufweist. Ferner ist eine Durchtrittsbohrung 10 für den Durchtritt eines Zigarettenstrangs 1 dargestellt.

In Fig. 2 ist der Zigarettenstrang 1 dargestellt, der teilweise aufgebrochen ist und sich in Richtung des Pfeils 5 bewegt. Der Zigarettenstrang 1 besteht aus einem Füller 3 aus Schnitttabak und einer Umhüllung 2 aus Zigarettenpapier. Der Zigarettenstrang 1 durchsetzt ein Resonatorgehäuse 4.1, dem Mikrowellen zwecks Erfassung der Masse, Dichte und/oder Feuchte des Füllers bzw. zwecks der Ermittlung, ob ein Fremdmaterial in dem Füller vorhanden ist, zugeführt werden. Das Resonatorgehäuse 4.1 weist einen Hohlkörper in Form eines Hohlzylinders 6 auf, dessen Innenraum 7 symmetrisch zu dem Pfosten 19 angeordnet ist. An dem Hohlzylinder ist ein Deckel 8 zum Verschließen angeschraubt. Sowohl Hohlzylinder 6 als auch Deckel 8 bestehen aus einem Material mit einem sehr niedrigen Temperaturausdehnungskoeffizienten. Hierzu eignet sich eine Legierung, die zumindest annähernd aus 64 % Eisen und 36 % Nickel besteht. Infolge der guten Konstanz der Geometrie des Resonatorgehäuses 4.1 lässt sich auch eine gute Konstanz der Messergebnisse erreichen. Hierzu trägt bspw. noch eine in Fig. 2 angedeutete Regelung der Temperatur des Resonatorgehäuses bei, dessen Temperatur durch einen Temperaturfühler 9 erfasst wird. Der Temperaturfühler steuert mindestens einen Heiztransistor 11, z.B. vom Typ BUZ 80 der Fa. Siemens, dessen Verlustwärme das Resonatorgehäuse vorzugsweise über Umgebungstemperatur erwärmt. Die Regelungseinrichtung selbst ist nicht in der Fig. 2 dargestellt, ist allerdings für einen Fachmann bekannt.

Der Innenraum 7 des Resonatorgehäuses 4.1 und auch vorzugsweise der Leitungsresonator 21, der hier ein offener Ring ist, ist mit einer dünnen Goldschicht 12 bedampft, die eine die Messwertkonstanz beeinträchtigende Korrosionsbildung zuverlässig verhindert und gleichzeitig, da diese elektrisch gut leitend ist, einen schädlichen Skin-Effekt verhindert. Zweckmäßigerweise wird das Resonatorgehäuse 4.1 auch von außen vergoldet, um auch Korrosion außen auszuschließen.

Zum mechanischen Abschluss des Innenraums 7 gegenüber dem Zigarettenstrang 1 und von diesem evtl. angeförderten Schmutzteilchen, also zwecks Verhinderung einer Verschmutzung des Innenraums 7, die das Messergebnis beeinträchtigen würde, dient ein Schutzrohr 13, das vorteilhaft aus einer Substanz der Polyaryletherketon (PAEK)-Gruppe, z.B. aus Polyetheretherketon (PEEK) besteht. An einem seiner Enden, an dem der Strang 1 in das Resonatorgehäuse 4 einläuft, kann das Schutzrohr 13 trichterförmig aufgeweitet sein, was allerdings in Fig. 2 aus Gründen der Übersichtlichkeit nicht dargestellt ist.

Das Resonatorgehäuse 4.1 erstreckt sich außerhalb des Innenraums 7 rohrförmig (14) auf beiden Seiten in Richtung des Strangs 1 nach außen, um den Austritt von Mikrowellen aus der Resonatorkammer zu verhindern. Es kann sich auch rohrförmig etwas nach innen erstrecken, was allerdings in Fig. 2 nicht dargestellt ist.

Zur Einkopplung der von einem Mikrowellengenerator erzeugten Mikrowellen dient eine durch eine Isolierung 16 vom Metallgehäuse 4.1 isolierte Einkoppelantenne 17. Zum Auskoppeln von Mikrowellen, die einer nicht dargestellten Auswertschaltung zugeführt werden sollen, dient eine durch eine Isolierung 16 gegenüber dem Deckel 8 isolierte Auskoppelantenne 18. Die genannten Antennen 17 und 18 können auch auf derselben Seite des Gehäuses angeordnet sein. Vorzugsweise sind diese dann in Umfangsrichtung versetzt angeordnet. Eine geeignete Auswertschaltung ist der deutschen Patentanmeldung 197 34 978.1 zu entnehmen, deren Offenbarung in diese Anmeldung aufgenommen sein soll.

Durch die Erfindung ist es nun möglich, ein eng gebündeltes Feld mit erhöhter Energiedichte vorzusehen, das insbesondere zwischen den beiden Endflächen 20 bzw. Feldaustrittsflächen 20 des Leitungsresonators 21, der in diesem Ausführungsbeispiel als ein offener Ring dargestellt ist, ausgeprägt ist. Hierdurch wird ein sehr kurzes bzw. kleines Messfenster bewirkt, was die Empfindlichkeit der Messung, insbesondere auf Fremdmaterialien, deutlich erhöht.

Der Leitungsresonator 21 ist dicht an den Koppelantennen 17 und 18 angeordnet. Zur Befestigung des Leitungsresonators sind nichtleitende Befestigungselemente vorgesehen, die das Gehäuse mit dem Leitungsresonator verbinden. Geht von dem offenen Ende der einkoppelnden Antenne 17 ein hochfrequentes elektromagnetisches Wechselfeld aus, so wird im Leitungsresonator 21 durch Influenz eine stehende Welle angeregt. Diese Welle nimmt Energie von der Einkoppelantenne 17 ab, wenn die Resonanzbedingung erfüllt ist, d.h. wenn die Wellenlänge der stehenden Welle mit der Länge L des Resonators harmoniert. Dies ist der Fall, wenn gilt: L = n x λ / 2, wobei n eine ganze Zahl ist. Die stehende Welle im Leitungsresonator erregt ihrerseits durch Influenz eine elektromagnetische Welle in der auskoppelnden Antenne 18, die die Energie aus dem Resonator ableitet. Vorstehend wurde eine kapazitive Kopplung beschrieben. Es ist im Rahmen der Erfindung auch möglich, eine induktive Kopplung vorzusehen.

An den offenen Enden 20 des Leitungsresonators 21 befindet sich ein Spannungsbauch der stehenden Welle. Dabei ist die Polarität der Innenflächen gleich, wenn n eine gerade Zahl ist, und entgegengesetzt, wenn n eine ungerade Zahl ist. In letzterem Fall entsteht zwischen den Endflächen ein konzentriertes elektrisches Feld, das sich durch die Durchtrittsbohrung für den Zigarettenstrang erstreckt. Dies führt zu einem besonders großen Einfluss der dielektrischen Eigenschaften des Messgutes auf das Verhalten des Resonators und damit zu einer effektiven Fremdkörpererkennung.

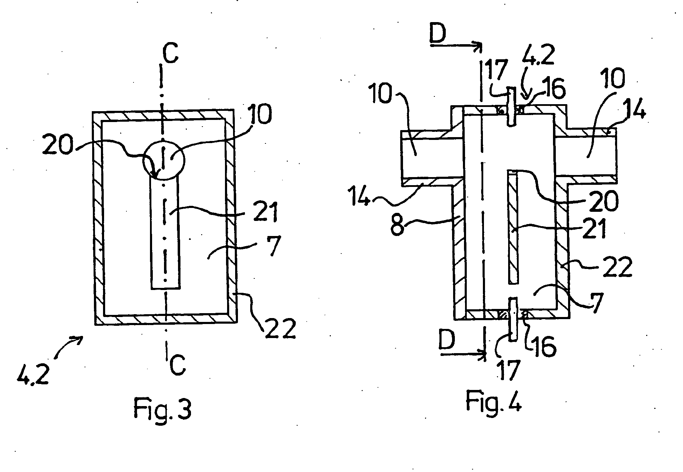

In Fig. 3 ist eine weitere Ausführungsform der vorliegenden Erfindung dargestellt, wobei im Unterschied zu dem vorherigen Ausführungsbeispiel gem. Figuren 1 und 2 ein Hohlquader 22 als Resonatorgehäuse 4.2 fungiert und ferner ein Leitungsresonator 21, der ein Metallstreifen ist. Fig. 3 ist eine Schnittdarstellung an der Schnittlinie D-D aus Fig. 4, wobei dieser Schnitt in Pfeilrichtung betrachtet wird. Fig. 4 ist eine seitliche Ansicht einer Schnittdarstellung entlang der Schnittlinie C-C aus Fig. 3. Die weiteren Merkmale, wie das Schutzrohr 13, die Goldschicht 12, der Zigarettenstrang 1 usw. sind in diesen Figuren nicht dargestellt, um die dargestellten Elemente deutlicher zu machen.

Das Feld, das von dem Leitungsresonator 21 bzw. aus der Endfläche 20 bzw. Feldaustrittsfläche 20 austritt, hat als Gegenelektrode die gegenüberliegende Gehäusewand, die dort als Masseelektrode fungiert.

Die voraufgeführten erfindungsgemäßen Ausführungsbeispiele sind besonders gut geeignet, um ein Verfahren zum Prüfen eines Produktionsmaterials gem der deutschen Patentanmeldung 101 00 664.0 auszuführen. Der Inhalt dieser Patentanmeldung soll durch Inbezugnahme in diese Anmeldung aufgenommen sein. Entsprechendes gilt für den Inhalt der DE 198 54 550 A1 und den Inhalt der deutschen Patentanmeldung 197 34 978.1.

Das Verfahren zum Prüfen eines Produktionsmaterials gem der 101 00 664.0 dient insbesondere dazu, die großen Mengen von Tabak, die in der Tabak verarbeitenden Industrie automatisch verarbeitet werden, zu untersuchen, und zwar insbesondere auf Fremdmaterialien, die in den Zigaretten vorhanden sein können, wobei diese Fremdmaterialien Auswirkungen auf die Produkteigenschaften wie Aussehen, Geschmack und Abrauchwerte haben können. Hierzu wird ein Mikrowellenfeld erzeugt, die Materialmenge wird in den Wirkbereich des Mikrowellenfeldes eingebracht und die Beeinflussung des Mikrowellenfeldes wird analysiert, wobei die Ist-Werte einer ersten und einer zweiten charakteristischen Größe des Mikrowellenfeldes gleichzeitig gemessen werden, wobei ein zulässiger Wertebereich für diese Ist-Werte vorgegeben wird, und wobei geprüft wird, ob die Ist-Werte in dem zulässigen Wertebereich liegen. Es wird dann ein Signal erzeugt, wenn die Ist-Werte nicht in dem zulässigen Wertebereich liegen.

Der zulässige Wertebereich umfasst bei diesem Verfahren vorzugsweise solche Werte der beiden Größen, die bei Beeinflussung des Mikrowellenfeldes durch eine Materialmenge, wie insbesondere einen Zigarettenstrang auftreten, die ausschließlich das Produktionsmaterial enthält. Der Materialstrom wird hierbei vorzugsweise vor oder nach dem Durchtritt durch den Wirkbereich des Mikrowellenfeldes in Abschnitte unterteilt und solche Abschnitte, bei deren Durchtritt das Signal erzeugt wird, werden nachfolgend aus dem Materialstrom ausgesondert. Der zulässige Wertebereich kann dadurch ermittelt werden, dass eine Referenzmenge des Produktionsmaterials, das keine Fremdmaterialien enthält, durch den Wirkbereich des Mikrowellenfeldes geführt wird und die Ist-Werte, die während des Durchtritts der Referenzmenge gemessen werden, den zulässigen Wertebereich bilden. Dabei kann die Referenzmenge vorteilhafterweise mit einem Hüllenmaterial umhüllt sein.

Dieses Verfahren kann vorzugsweise mit einem weiteren Verfahren, in dem parallel und unabhängig hierzu aus den Ist-Werten derselben charakteristischen Größen des Mikrowellenfeldes wenigstens eine Eigenschaft des Produktionsmaterials bestimmt werden kann, durchgeführt werden. Diese Eigenschaft kann insbesondere die Dichte, die Masse und/oder die Feuchte von als Produktionsmaterial verwendetem Tabak sein.

Als Fremdmaterialien kommen insbesondere Metalle und Kunststoffe in Betracht, die physikalisch eine ganz andere Veränderung des Mikrowellenfeldes hervorrufen als das Wasser enthaltende Tabakmaterial. Die hohe Leitfähigkeit der Metalle führt bspw. dazu, dass die Mikrowellen stark reflektiert oder gestreut werden. Kunststoffe weisen zu Tabak deutlich unterschiedliche Dielektrizitätszahlen und Verlustfaktoren auf, so dass diese auch einfach detektiert werden können.

Bei dem Verfahren werden vorzugsweise unterschiedliche Frequenzen dem Resonator .zugeführt, wobei die Transmissionsleistung bei diesen Frequenzen ermittelt wird und aus diesen Daten nach einem mathematischen Verfahren die beiden Größen oder mehrere charakteristische Größen bestimmt werden. Hierzu werden vorzugsweise Resonanzkurven verwendet und entsprechende Wertepaare ermittelt, die aufgrund der geringfügigen Verstimmung um eine Mittenfrequenz gemessen werden. Für die näheren Einzelheiten wird auf die deutsche Patentanmeldung 101 00 664.0 verwiesen.

Die in dem Ausführungsbeispiel gem den Figuren 3 und 4 verwendeten Materialien und Beschichtungen können diejenigen sein, die bei dem Ausführungsbeispiel gem den Figuren 1 und 2 Verwendung finden.

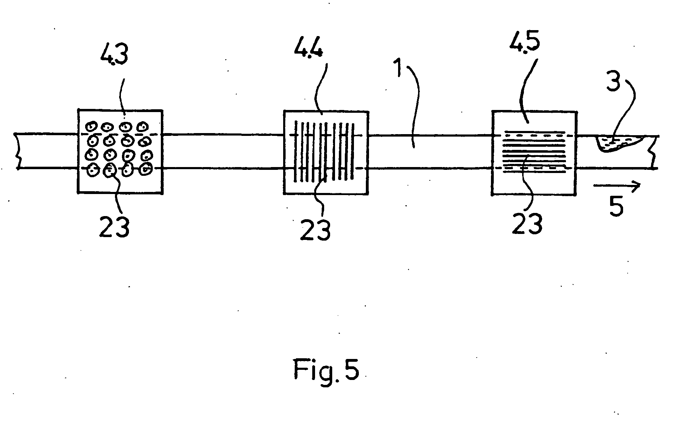

In Fig. 5 ist schematisch eine erfindungsgemäße Messeinrichtung mit drei Resonatorgehäusen 4.3 - 4.5 dargestellt. Durch die Resonatorgehäuse 4.3 - 4.5 läuft ein Zigarettenstrang 1, der mit einem Füller 3 gefüllt ist. Um den Füller 3 ist auch ein Umhüllungspapierstreifen 2 angeordnet. Die Resonatorgehäuse 4.3 - 4.5 weisen Hohlräume auf, die nicht dargestellt sind. In den Hohlräumen werden elektromagnetische Felder erzeugt, die unterschiedlich ausgerichtet elektrische Feldlinien 23 aufweisen. So verlaufen Feldlinien 23 des rechts in Fig. 5 angeordneten Resonators 4.5 in Förderrichtung 5. In dem Resonator 4.4, der in der Mitte der Fig. 5 angeordnet ist, verlaufen die Feldlinien 13 quer zur Förderrichtung 5 in der Zeichenebene und in dem linken Resonator 4.3 verlaufen die Feldlinien 23 quer zur Förderrichtung 5 und aus der Zeichenebene heraus.

Wenn das Messgut 3 bzw. 1 in verschiedenen Richtungen vom Feld durchdrungen wird, bringt jede zusätzliche Richtung weitere Messinformationen. Vorzugsweise wird in zwei oder sogar in drei Richtungen gemessen, die sowohl in Bewegungsrichtung liegen als auch senkrecht dazu. Hierdurch ist es möglich, viele Fremdkörper zu erkennen, die bspw. bei einer Messung ausschließlich in einer Richtung nicht detektiert werden würden.

Die Messsignale können anschließend getrennt ausgewertet werden, so dass ein Auswurf erfolgt, wenn mindestens einer der Sensoren bzw. Messvorrichtungen einen Fremdkörper erkennt. Die Messsignale können aber auch miteinander verknüpft werden, um die Ortsauflösung zu verbessern oder um die generelle Empfindlichkeit des Systems zu erhöhen. Der zeitliche Versatz der Messungen ergibt sich aus dem Abstand der Resonatorgehäuse der Produktionsgeschwindigkeit bzw. der Fördergeschwindigkeit des zu prüfenden Materials und ist damit leicht rechnerisch zu kompensieren.

### Bezugszeichenliste

- 1: Zigarettenstrang
- 2: Umhüllung
- 3: Füller
- 4.1 - 4.5: Resonatorgehäuse
- 5: Bewegungsrichtung
- 6: Hohlzylinder
- 7: Innenraum (Hohlraum)
- 8: Deckel
- 9: Temperaturfühler
- 10: Durchtrittsbohrung
- 11: Heiztransistor
- 12: Goldschicht
- 13: Schutzrohr
- 14: rohrförmiger Fortsatz des Resonatorgehäuses
- 16: Isolierung
- 17: Einkoppelantenne
- 18: Auskoppelantenne
- 19: Pfosten
- 20: Endfläche / Feldaustrittsfläche
- 21: Leitungsresonator
- 22: Hohlquader
- 23: Feldlinien

## Patentansprüche

1. Mikrowellenmesseinrichtung für die Prüfung einer Materialmenge, insbesondere eines Materialstroms (3) der Tabak verarbeitenden Industrie, auf Vorhandensein wenigstens eines Fremdmaterials und/oder für die Erfassung der Masse, Dichte und/oder der Feuchte der Materialmenge (3), mit wenigstens zwei Resonatorgehäusen (4.1 - 4.5), die jeweils wenigstens eine Durchtrittsöffnung (10) für die Materialmenge (3) aufweisen und in denen jeweils ein elektromagnetisches Feld (23) erzeugbar ist, und die jeweils einen Messbereich definieren, wobei die elektromagnetischen Felder jeweils ein elektrisches Feld (23) umfassen, **dadurch gekennzeichnet, dass** die elektrischen Felder in den jeweiligen Messbereichen in zueinander verschiedenen Richtungen im Raum orientiert sind.

2. Mikrowellenmesseinrichtung nach Anspruch 1, **dadurch gekennzeichnet, dass** die Messbereiche in Förderrichtung (5) des Materialstromes (3) hintereinander liegen.

3. Mikrowellenmesseinrichtung nach Anspruch 1 oder 2, **dadurch gekennzeichnet, dass** die elektrischen Felder (23) im Wesentlichen orthogonal zueinander orientiert sind.

4. Mikrowellenmesseinrichtung nach einem der Ansprüche 1 bis 3, **dadurch gekennzeichnet, dass** ein Feld (23) im Wesentlichen in Förderrichtung (5) des Materialstromes (3) orientiert ist und ein Feld (23) quer dazu.

5. Mikrowellenmesseinrichtung nach einem der Ansprüche 1 bis 4, **dadurch gekennzeichnet, dass** drei Resonatorgehäuse (4.1 - 4.5) vorgesehen sind.

6. Mikrowellenmesseinrichtung nach einem der Ansprüche 1 bis 5, **dadurch gekennzeichnet, dass** diese wenigstens eine Mikrowellenresonatoreinrichtung, insbesondere für die Prüfung einer Materialmenge, insbesondere eines Materialstromes (3) der Tabak verarbeitenden Industrie, auf Vorhandensein wenigstens eines Fremdmaterials und/oder für die Erfassung der Masse, Dichte und/oder der Feuchte der Materialmenge (3), umfasst, mit einem Resonatorgehäuse (4.1 - 4.5), das eine Durchtrittsöffnung (10) für die Materialmenge (3) aufweist, wobei die Materialmenge wenigstens teilweise in einen Prüfbereich, der insbesondere in der Resonatoreinrichtung angeordnet ist, überführbar ist, wobei wenigstens ein die Energiedichte von elektromagnetischen Wellen erhöhendes Element (21) vorgesehen ist, wobei die Energiedichte in wenigstens einem Teil des Prüfbereichs erhöhbar ist.

7. Mikrowellenmesseinrichtung nach einem der Ansprüche 1 bis 6, **dadurch gekennzeichnet, dass** ein einziges Gehäuse wenigstens zwei Resonatorgehäuse (4.1 - 4.5) umfasst.

8. Verfahren zur Prüfung einer Materialmenge (3), insbesondere eines Materialstromes (3) der Tabak verarbeitenden Industrie, auf Vorhandensein wenigstens eines Fremdmaterials und/oder zur Erfassung der Masse, Dichte und/oder der Feuchte der Materialmenge mittels einer Mikrowellenmesseinrichtung, wobei ein erstes elektromagnetisches Feld (23) in einem ersten Resonator (4.1 - 4.5) der Mikrowellenmesseinrichtung erzeugt wird und wobei ein zweites elektromagnetisches Feld (23) in einem zweiten Resonator (4.1 -4.5) der Mikrowellenmesseinrichtung erzeugt wird, wobei die Materialmenge (3) durch das erste Feld (23) und das zweite Feld (23) hindurchbewegt wird und wobei eine Änderung wenigstens einer Eigenschaft der elektromagnetischen Felder (23) gemessen wird, wobei die elektromagnetischen Felder (23) elektrische Felder (23) umfassen, **dadurch gekennzeichnet, dass** diese elektrischen Felder (23) in zueinander verschiedenen Richtungen orientiert sind.

9. Verfahren nach Anspruch 8, **dadurch gekennzeichnet, dass** ein dritter Resonator (4.1 - 4.5) vorgesehen ist, der ein drittes elektromagnetisches Feld (23) erzeugt, wobei die Materialmenge (3) durch das dritte elektromagnetische Feld (23) hindurchbewegt wird, wobei das dritte elektromagnetische Feld (23) ein elektrisches Feld (23) umfasst, das in zu dem ersten elektrischen Feld (23) und dem zweiten elektrischen Feld (23) unterschiedlicher Richtung orientiert ist und die Änderung wenigstens einer Eigenschaft des dritten elektromagnetischen Feldes (23) gemessen wird.

10. Verfahren nach Anspruch 8 oder 9, **dadurch gekennzeichnet, dass** die elektrischen Felder (23) im Wesentlichen orthogonal zueinander sind.

11. Verfahren nach einem der Ansprüche 8 bis 10, **dadurch gekennzeichnet, dass** die gemessenen Werte ausgewertet werden, um ein Auswurfsignal zu generieren.

12. Verfahren nach Anspruch 11, **dadurch gekennzeichnet, dass** die gemessenen Werte der Resonatoren miteinander in Beziehung gesetzt werden.

## Claims

1. Microwave measuring device for testing a material quantity, in particular a material flow (3) in the tobacco processing industry, for the presence of at least one foreign material and/or for detecting the weight, density and/or moisture content of the material quantity (3), with at least two resonator housings (4.1 - 4.5), each of which has at least one passage (10) for the material quantity (3) and in each of which an electromagnetic field (23) can be generated, and which respectively define a measuring area, and the electromagnetic fields respectively contain an electric field (23), **characterised in that** the electric fields are spatially oriented in different directions from one another in the respective measuring areas.

2. Microwave measuring device as claimed in claim 1, **characterised in that** the measuring areas lie one after the other in the conveying direction (5) of the material flow (3).

3. Microwave measuring device as claimed in claim 1 or 2, **characterised in that** the electric fields (23) are oriented essentially orthogonally with respect to one another.

4. Microwave measuring device as claimed in one of claims 1 to 3, **characterised in that** one field (23) is oriented essentially in the conveying direction (5) of the material flow (3) and one field (23) is oriented transversely to it.

5. Microwave measuring device as claimed in one of claims 1 to 4, **characterised in that** three resonator housings (4.1 - 4.5) are provided.

6. Microwave measuring device as claimed in one of claims 1 to 5, **characterised in that** it comprises at least one microwave resonator device, in particular for testing a quantity of material, in particular a material flow (3) in the tobacco processing industry, for the presence of at least one foreign material and/or for detecting the weight, density and/or moisture content of the material quantity (3), with a resonator housing (4.1 - 4.5) which has a passage (10) for the material quantity (3), and the material quantity can be transferred at least partially to a test area which is disposed in the resonator device in particular, and at least one element (21) which increases the energy density of electromagnetic waves is provided, and the energy density can be increased in at least a part of the test area.

7. Microwave measuring device as claimed in one of claims 1 to 6, **characterised in that** a single housing comprises at least two resonator housings (4.1 - 4.5).

8. Method of testing a material quantity (3), in particular a material flow (3) in the tobacco processing industry, for the presence at least of one foreign material and/or for detecting the weight, density and/or moisture content of the material quantity by means of a microwave measuring device, whereby a first electromagnetic field (23) is generated in a first resonator (4.1 - 4.5) of the microwave measuring device, and a second electromagnetic field (23) is generated in a second resonator (4.1 - 4.5) of the microwave measuring device, and the material quantity (3) is moved through the first field (23) and the second field (23) and a change in at least one property of the electromagnetic fields (23) is measured, and the electromagnetic fields (23) contain electric fields (23), **characterised in that** these electric fields (23) are oriented in different directions from one another.

9. Method as claimed in claim 8, **characterised in that** a third resonator (4.1 - 4.5) is provided, which generates a third electromagnetic field (23), and the material quantity (3) is moved through the third electromagnetic field (23), and the third electromagnetic field (23) contains an electric field (23) which is oriented in a different direction from the first electric field (23) and the second electric field (23), and the change in at least one property of the third electromagnetic field (23) is measured.

10. Method as claimed in claim 8 or 9, **characterised in that** the electric fields (23) are disposed essentially orthogonally with respect to one another.

11. Method as claimed in one of claims 8 to 10, **characterised in that** the measured values are evaluated in order to generate an ejection signal.

12. Method as claimed in claim 11, **characterised in that** the measured values of the resonators are correlated with one another.

## Revendications

1. Dispositif de mesure à micro-ondes pour le contrôle d'une quantité de matière, en particulier d'un courant de matière (3) de l'industrie de transformation du tabac, portant sur la présence d'au moins une matière étrangère, et/ou pour déterminer la masse, la densité et/ou l'humidité de la quantité de matière (3), comportant au moins deux boîtiers résonateurs (4.1-4.5), dont chacun comprend au moins une ouverture de passage (10) pour la quantité de matière (3), dans chacun desquels un champ électromagnétique (23) peut être produit, et qui chacun définissent une zone de mesurage, chacun des champs électromagnétiques comportant un champ électrique (23), **caractérisé en ce que** les champs électriques se trouvant dans chacune des zones de mesurage sont orientés dans l'espace dans des directions différentes l'une de l'autre.

2. Dispositif de mesure à micro-ondes selon la revendication 1, **caractérisé en ce que** les zones de mesurage sont disposées les unes derrière les autres dans la direction d'avance (5) du courant de matière (3).

3. Dispositif de mesure à micro-ondes selon la revendication 1 ou 2, **caractérisé en ce que** les champs électriques (23) sont pour l'essentiel orientés orthogonalement les uns aux autres.

4. Dispositif de mesure à micro-ondes selon l'une des revendications 1 à 3, **caractérisé en ce qu'**un champ (23) est pour l'essentiel orienté dans la direction d'avance (5) du courant de matière (3), et un champ (23) est orienté perpendiculairement à celui-là.

5. Dispositif de mesure à micro-ondes selon l'une des revendications 1 à 4, **caractérisé en ce qu'**il est prévu trois boîtiers résonateurs (4.1-4.5).

6. Dispositif de mesure à micro-ondes selon l'une des revendications 1 à 5, **caractérisé en ce que** ce dispositif comprend au moins un dispositif résonateur micro-ondes, en particulier pour le contrôle d'une quantité de matière, en particulier d'un courant de matière (3) de l'industrie de transformation du tabac, portant sur la présence d'au moins une matière étrangère et/ou pour déterminer la masse, la densité et/ou l'humidité de la quantité de matière (3), comportant un boîtier résonateur (4.1-4.5) qui comprend une ouverture de passage (10) pour la quantité de matière (3), où la quantité de matière peut au moins partiellement être transférée dans une zone de contrôle qui est disposée en particulier dans le dispositif résonateur, où au moins un élément (21) qui augmente la densité d'énergie des ondes électromagnétiques est prévu, la densité d'énergie pouvant être augmentée dans au moins une partie de la zone de contrôle.

7. Dispositif de mesure à micro-ondes selon l'une des revendications 1 à 6, **caractérisé en ce qu'**un boîtier unique comprend au moins deux boîtiers résonateurs (4.1-4.5).

8. Procédé de contrôle d'une quantité de matière (3), en particulier d'un courant de matière (3) de l'industrie de transformation du tabac, portant sur la présence d'au moins une matière étrangère, et/ou pour déterminer la masse, la densité et/ou l'humidité de la quantité de matière à l'aide d'un dispositif de mesure à micro-ondes, un premier champ électromagnétique (23) étant produit dans un premier résonateur (4.1-4.5) du dispositif de mesure à micro-ondes, et un deuxième champ électromagnétique (23) étant produit dans un deuxième résonateur (4.1-4.5) du dispositif de mesure à micro-ondes, la quantité de matière (3) traversant le premier champ (23) et le deuxième champ (23), où on mesure une variation d'au moins une propriété des champs électromagnétiques (23), les champs électromagnétiques (23) comprenant des champs électriques (23), **caractérisé en ce que** ces champs électriques (23) sont orientés dans des directions différentes l'une de l'autre.

9. Procédé selon la revendication 8, **caractérisé en ce qu'**il est prévu un troisième résonateur (4.1-4.5) qui produit un troisième champ électromagnétique (23), où la quantité de matière (3) traverse le troisième champ électromagnétique (23), où le troisième champ électromagnétique (23) comprend un champ électrique (23) qui est orienté dans une direction différente de celle du premier champ électrique (23) et du deuxième champ électrique (23), et où on mesure la variation d'au moins une propriété du troisième champ électromagnétique (23).

10. Procédé selon la revendication 8 ou 9, **caractérisé en ce que** les champs électriques (23) sont pour l'essentiel orthogonaux les uns aux autres.

11. Procédé selon l'une des revendications 8 à 10, **caractérisé en ce que** les valeurs mesurées font l'objet d'une évaluation pour produire un signal d'éjection.

12. Procédé selon la revendication 11, **caractérisé en ce que** les valeurs mesurées des résonateurs sont mises en relation les unes avec les autres.
